# EUROPÄISCHE PATENTSCHRIFT

(11) **EP 1 036 303 B1**
(45) Veröffentlichungstag und Bekanntmachung des Hinweises auf die Patenterteilung: **15.09.2004**
(21) Anmeldenummer: 98962255.0
(22) Anmeldetag: 12.11.1998
(51) Int. Cl.: G01D 5/14, G01D 5/16

(54) **MESSVORRICHTUNG ZUR BERÜHRUNGSLOSEN ERFASSUNG EINES DREHWINKELS**
MEASURING DEVICE FOR CONTACTLESS DETECTION OF A ROTATIONAL ANGLE
DISPOSITIF DE MESURE POUR DETERMINER SANS CONTACT UN ANGLE DE ROTATION

(30) Priorität: 04.12.1997 DE 19753776
(43) Veröffentlichungstag der Anmeldung: 20.09.2000
(73) Patentinhaber: ROBERT BOSCH GMBH, 70442 Stuttgart (DE)
(72) Erfinder: REICHL, Asta, D-70499 Stuttgart (DE); SCHÄFER, Wolfgang, D-71723 Grossbottwar (DE); SCHWEINFURTH, Reiner, D-75031 Eppingen (DE); STÖVE, Michael, D-96114 Hirschaid (DE); KLOTZBÜCHER, Thomas, D-73635 Rudersberg (DE); WÜNSCH, Stephan, D-90459 Nürnberg (DE)
(86) Internationale Anmeldenummer: PCT/DE1998/003312
(87) Internationale Veröffentlichungsnummer: WO 1999/030112

(56) Entgegenhaltungen:
- EP-A- 0 611 951
- EP-A- 0 665 416
- DE-A- 4 014 885

## Beschreibung

### Stand der Technik

Die Erfindung geht aus von einer Meßvorrichtung zur berührungslosen Erfassung eines Drehwinkels nach der Gattung des Anspruchs 1. Aus der nachveröffentlichten DE-OS 196 34 381.3 ist ein Sensor bekannt, der in drei Ebenen übereinander angeordnet ist. Der Rotor bildet dabei die mittlere Ebene, wobei er aus der Trägerplatte für einen Permanentmagneten besteht. Die Trägerplatte besteht aus nicht magnetisch leitendem Material, so daß der Magnetfluß über die beiden anderen Ebenen, d.h. den Stator, verläuft und mit Hilfe zweier Distanzstücke, die zwischen den beiden Ebenen des Stators angeordnet sind, gesteuert wird. Mit diesem Sensor ist zwar ein relativ großer Winkelbereich ohne Vorzeichenwechsel meßbar, er baut aber in Achsrichtung gesehen durch den Aufbau in drei parallelen Ebenen relativ groß.

In der Schrift EP-A 0611951 wird ein Sensor beschrieben, bei dem sich bei Drehung die Richtung des magnetischen Flusses ändert, sobald der Permanentmagnet von einem Segment des Stators zum anderen Segment des Stators wechselt, also den Spalt, in dem sich auch das Hallelement befindet, überschreitet. Dadurch ändert sich auch die Flussrichtung durch das Hallelement. Dies bedeutet auch, dass der magnetische Fluss in jeder Drehstellung immer über beide Teile des Stators verläuft. Die Messkurve würde somit im Unterschied zum Anmeldungsgegenstand einen Nulldurchgang aufweisen.

Bei dem Sensor nach der Schrift EP-A 0665416 handelt es sich um einen radial aufgebauten Sensor. Hier umgreift der Rotor den vollen Umfang der Statorteile. Der Luftspalt ist immer mit gleicher radialer Dicke ausgebildet. Für ein zusätzliches Rückflussteil sind hier keine Anhaltspunkte entnehmbar.

### Vorteile der Erfindung

Die erfindungsgemäße Meßvorrichtung zur berührungslosen Erfassung eines Drehwinkels mit den kennzeichnenden Merkmalen des Anspruchs 1 hat demgegenüber den Vorteil, daß der Sensor

in Achsrichtung eine relativ kleine Größe aufweist. Er baut nur noch in zwei Ebenen. Die Trägerplatte des Permanentmagneten, die den Rotor darstellt, dient zugleich auch zur Führung des magnetischen Flusses. Ferner wird durch den Aufbau die Anzahl der Teile und der damit verbundene Montageaufwand verringert.

Durch ein Überstehen des Rückflußstückes über die Trägerplatte, bzw. der Trägerplatte über das Rückflußstück ist eine Unempfindlichkeit gegen ein Axialspiel und/oder ein Radialspiel des Sensors erreichbar.

Der Sensor ist aufgrund seines einfachen Aufbaus mit relativ geringem Montageaufwand in verschiedenen Systemen, wie z.B. einer Drosselmeßvorrichtung, eines Pedalmoduls für einen Gaspedalwertgeber integrierbar oder als eigenständiger Sensor bei Drosselklappengebern oder einer Karosserieeinfederungsvorrichtung verwendbar.

Durch die in den Unteransprüchen aufgeführten Maßnahmen sind vorteilhafte Weiterbildungen und Verbesserungen der im Anspruch 1 angegebenen Meßvorrichtung möglich.

### Zeichnung

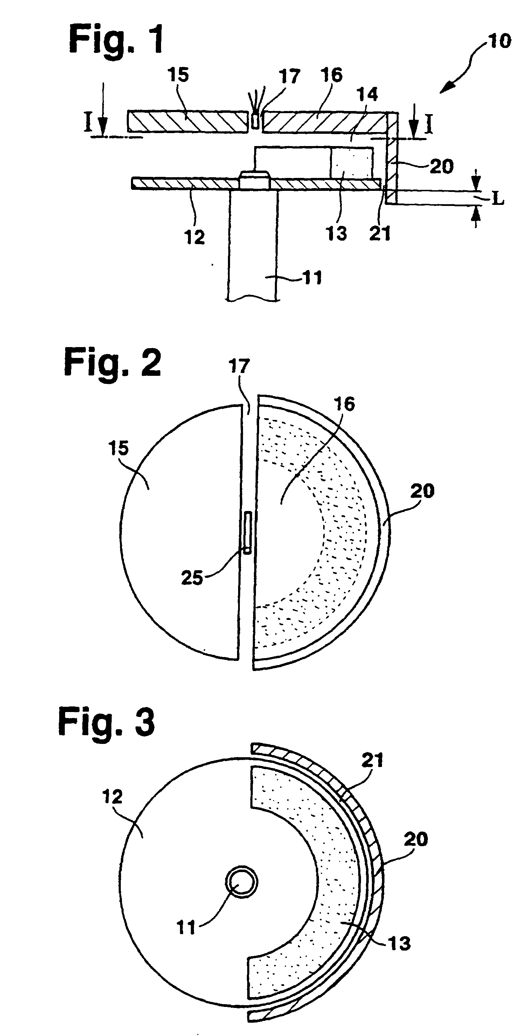

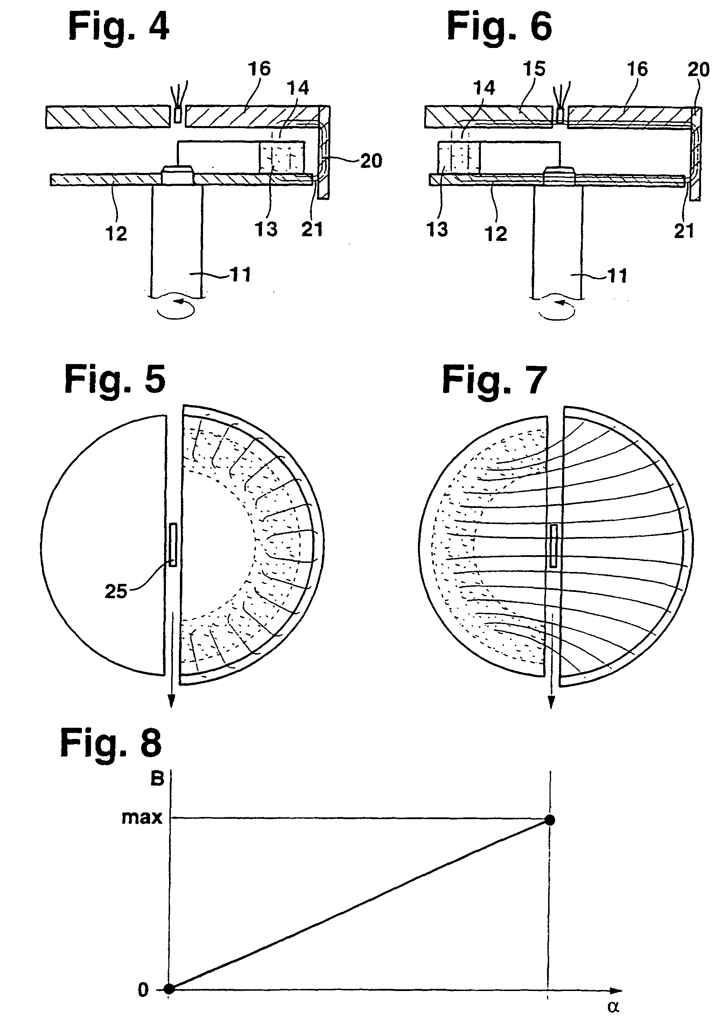

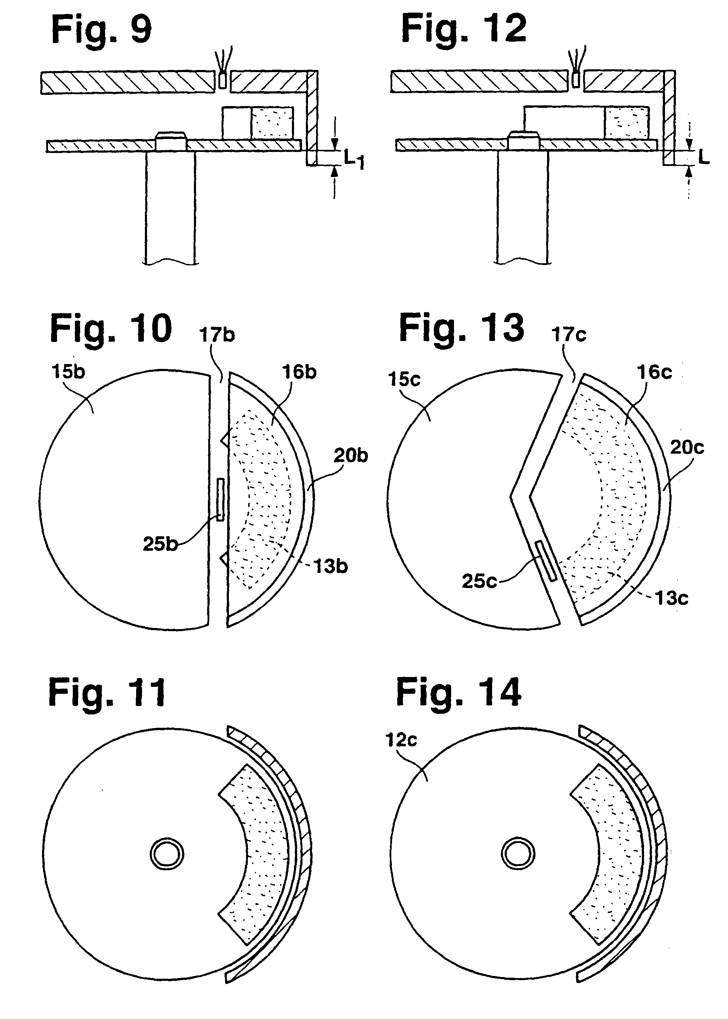

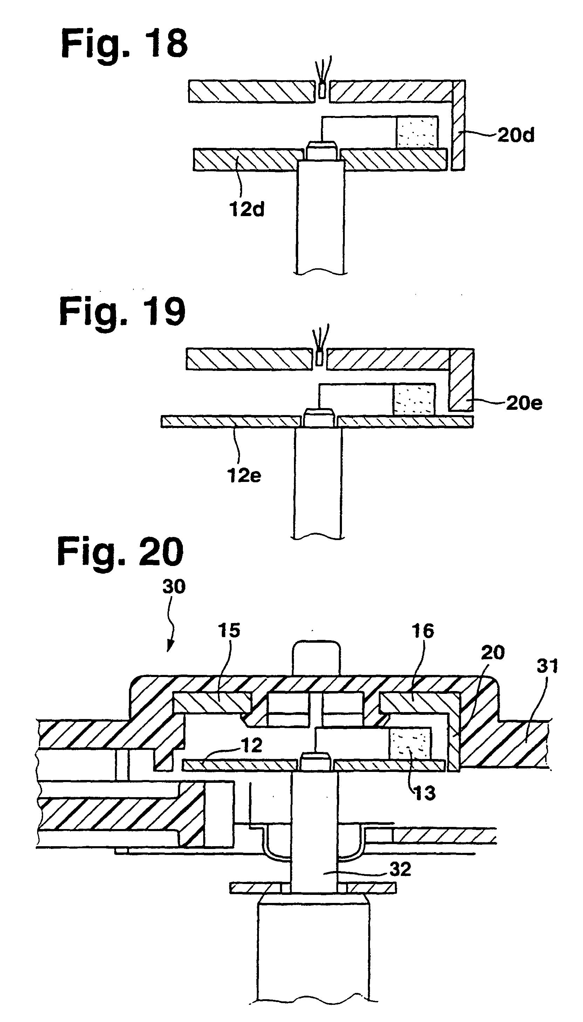

Ausführungsbeispiele der Erfindung sind in der Zeichnung dargestellt und in der nachfolgenden Beschreibung näher erläutert. Figur 1 zeigt einen Längsschnitt durch ein erstes Ausführungsbeispiel, Figur 2 eine Draufsicht auf das Ausführungsbeispiel nach Figur 1, Figur 3 einen Schnitt durch das Ausführungsbeispiel nach Figur 1 in Linie I-I, Figur 4 und Figur 5 zeigen den Magnetfluß bei einer Drehung α um 0° bzw. einer Induktion B = 0, die Figuren 6 und 7 zeigen den Magnetfluß bei maximaler Winkeldrehung bzw. bei einer Induktion von B = Max, die Figur 8 zeigt den entsprechenden Verlauf der Induktion B über den Drehwinkel a. Weitere Ausführungsbeispiele sind als Längsschnitt, als Draufsicht und als Schnitt in Richtung I-I in den Figuren 9, 10, 11 bzw. 12, 13, 14 bzw. 15, 16, 17 dargestellt. Die Figuren 18 und 19 zeigen weitere Abwandlungen. Den Einbau eines Sensors in einen Drosselklappensteller zeigt in Längsschnitt die Figur 20.

### Beschreibung der Ausführungsbeispiele

In Figur 1 ist mit 10 ein Sensor bezeichnet, der mit Hilfe einer Achse 11 mit einem nicht dargestellten Bauteil verbunden ist, dessen Drehbewegung bestimmt werden soll. Auf die Stirnseite der Achse 11 ist eine Trägerplatte 12 mittig aufgesetzt, die gleichzeitig als Rotor dient. Auf der Trägerplatte 12 ist möglichst mit großem radialen Abstand vom Mittelpunkt, d.h. vom Ansatzpunkt der Achse 11 ein ringförmiger Permanentmagnet 13 angeordnet. Je größer hierbei der Abstand ist, desto besser ist die Auflösung des Meßsignals. Der Permanentmagnet 13 kann als Kreisausschnitt (Kreissegment) oder Teil eines Kreisrings ausgeführt sein. Sein Winkelbereich ist mindestens so groß, wie der zu bestimmende maximale Drehwinkel des zu überwachenden bzw. des zu messenden Bauteils. Wie aus den Darstellungen in der Figur 2 bzw. 3 zu ersehen ist, beträgt der Winkelbereich des Permanentmagneten 13 bei diesem Ausführungsbeispiel ca. 180 Grad, so daß ein zu messender Drehwinkel von bis zu 180 Grad erreicht werden kann. Der Permanentmagnet 13 ist ferner in Achsrichtung, d.h. senkrecht zur Trägerplatte 12 polarisiert. Die Trägerplatte 12 besteht aus magnetisch leitendem, insbesondere weichmagnetischem Material.

In einer zweiten Ebene über dem Permanentmagneten 13 ist parallel zur Trägerplatte 12 mit einem geringen Spalt ein Stator angeordnet, der aus zwei Segmenten 15, 16 besteht.

Zwischen den beiden Segmenten 15, 16 ist ein durchgehender Spalt 17 ausgebildet, der über den Mittelpunkt der Trägerplatte 12 bzw. der Achse 11 verläuft. Die beiden Segmente 15, 16 sind somit gleich groß ausgebildet und weisen jeweils einen Winkelbereich von 180 Grad auf. An der äußeren Stirnseite des Segments 16, d.h. nicht auf der dem Spalt 17 zugewandten Stirnseite, ist über die gesamte Länge, d.h. über einen Winkelbereich von 180 Grad ein Rückflußstück 20 angeordnet. Von der Funktion her wäre es auch möglich, das Rückflußstück 20 entsprechend am Segment 15 auszubilden. Das Rückflußstück 20 ragt über die Trägerplatte 12 über eine Länge L hinaus. Ferner weisen die Segmente 15, 16 einen geringfügig größeren Durchmesser als die Trägerplatte 12 auf, so daß sich zwischen der Stirnseite der Trägerplatte 12 und dem Rückflußstück ein Spalt 21 bildet. Dieser Spalt 21 soll möglichst gering ausgebildet sein, um einen möglichst ungestörten magnetischen Fluß vom Rückflußstück 20 zur Trägerplatte 12 zu ermöglichen. Ferner muß der Spalt 21 aber eine ungestörte Rotation der Trägerplatte 12 ermöglichen. Die beiden Segmente 15, 16 und das Rückflußstück 20 bestehen aus magnetisch leitendem, insbesondere weichmagnetischem Material. Selbstverständlich muß auch der sich zwischen dem Permanentmagneten 13 und den beiden Segmenten 15, 16 befindende Spalt 14 so ausgebildet sein, daß eine ungestörte Rotation der Trägerplatte 12 mit dem Permanentmagneten 13 möglich ist. Bei der Drehbewegung muß jeweils der gleiche Volumenbetrag unter den beiden Segmenten 15, 16 verschieben.

Im Spalt 17 zwischen den beiden Segmenten 15, 16 ist ein magnetfeldempfindliches Element 25, wie zum Beispiel Feldplatte, Magnettransistor, Spulen, magnetoresitives Element oder ein Hall-Element angeordnet. Wichtig hierbei ist, daß das magnetfeldempfindliche Element eine möglichst lineare Abhängigkeit seines Ausgangssignals von der magnetischen Induktion B aufweist. In den Figuren 1 bis 3 ist jeweils eine Messung mit Hilfe eines einzigen magnetfeldempfindlichen Elements 25 dargestellt. Je weiter das Element 25 mittig im Spalt 17 über der Achse 11 angeordnet ist, desto besser ist das Meßsignal. Hingegen wäre es auch möglich, zum Beispiel aus Sicherheitsgründen mit Hilfe zweier oder mehrerer Elemente 25 zu arbeiten.

In der Figur 8 ist der Verlauf der Kennlinie der magnetischen Induktion B im Element 25 über den Drehwinkel α der Achse 11 dargestellt. Es ist erkennbar, daß bei einem Drehwinkel von Null Grad die Induktion B ebenfalls Null beträgt, während sie beim maximalen Drehwinkel α auch den maximalen Induktionswert erreicht. Bei diesem Ausführungsbeispiel ist ein maximaler Drehwinkel von 180 Grad erreichbar. Die Stellung des Sensors 10 bei einem Drehwinkel von Null Grad ist in den Figuren 4 und 5 dargestellt. Es ist ersichtlich, daß der Magnetfluß vom Permanentmagneten 13 über den Spalt 14 zum Segment 16, von dort über das Rückflußstück 20, den Spalt 21 und die Trägerplatte 12 zum Permanentmagneten 13 zurückfließt. Wie insbesondere aus der Figur 5 ersichtlich ist, ist der Magnetfluß so gesteuert, daß er bei einem Drehwinkel von 0° nicht durch das Element 25 verläuft, so daß im Element 25 keine magnetische Induktion erfolgen kann. Wird nun die Achse 11 gedreht und somit die Trägerplatte 12 mit dem Permanentmagneten 13, so wird der durch das Element 25 verlaufende magnetische Fluß vergrößert, so daß die in Figur 8 dargestellte lineare Meßlinie entsteht. Die Einstellung bei maximalem Drehwinkel α ist in den Figuren 6 und 7 dargestellt. In der Stellung bei maximalem Drehwinkel verläuft der Magnetfluß vom Permanentmagneten 13 über den Spalt 14 in das Segment 15. Von dort fließt der Magnetfluß durch den Spalt 17 und das dort angeordnete Element 25 in das Segment 16, das Rückflußteil 20, über den Spalt 21 in die Trägerplatte 12 und zurück in den Permanentmagneten 13. Insbesondere aus der Figur 7 ist erkennbar, daß bei dieser Winkelstellung im Element 25 eine maximal mögliche magnetische Induktion B bewirkt wird.

Um einen ungestörten, fehlerfreien Magnetfluß bei diesen Ausführungsbeispielen zu ermöglichen, muß im Bereich des Spaltes 21 die Stirnseite der Trägerplatte 12 mindestens von dem Rückflußstück 20 überdeckt werden. Da aber bei der Rotation der Trägerplatte 12 Schwankungen auftreten können bzw. aufgrund der baulichen Toleranzen, ragt das Rückflußstück 20 um den Abschnitt L über die Trägerplatte 12 hinaus. Dadurch wird der Sensor 10 gegen Axialspiel unempfindlich.

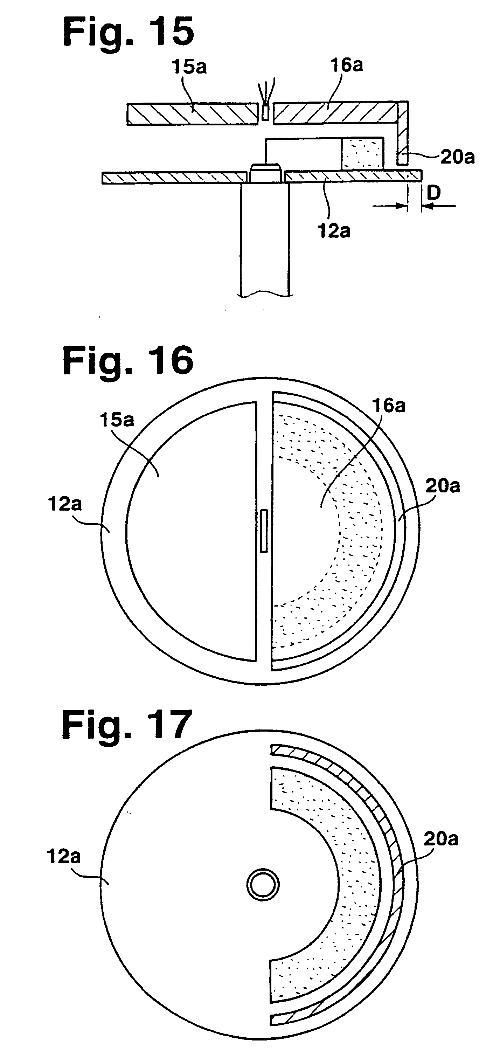

In den Figuren 15 bis 17 ist nun eine Abwandlung dargestellt, bei der eine Unempfindlichkeit gegenüber Radialspiel erreicht wird. In diesem Ausführungsbeispiel ragt die Trägerplatte 12a über das Rückflußstück 20a um den Abschnitt D hinaus. Dies bedeutet auch, daß die Segmente 15a und 16a einen kleineren Durchmesser als die Trägerplatte 12a aufweisen.

In den Abwandlungen der weiteren Ausführungsbeispiele sind konstruktive Ausgestaltungen dargestellt, um verschiedene Drehwinkel erfassen zu können. Im Ausführungsbeispiel nach den Figuren 9 bis 11 ist eine unsymmetrische Position des Spalts 17b dargestellt. Hierbei sind die Segmente 15b bzw. 16b unterschiedlich groß ausgebildet. Die Größe des Permanentmagneten 13b bzw. dessen Winkel ist auf die Überdeckungsfläche des zugeordneten Segments 16b mit dem daran angeordneten Rückflußteil 20b begrenzt. Bei einer Verwendung nur eines einzigen Elements 25b kann dieses wieder mittig im Spalt 17b angeordnet sein.

Im Ausführungsbeispiel nach den Figuren 12 bis 14 ist eine abgewinkelte Anordnung der beiden Segmente 15c und 16c dargestellt. Der Spalt 17c verläuft unter einem Winkel, wobei der Schlitz 17c über den Mittelpunkt der Trägerplatte 12c verläuft. Das Element 25c ist außermittig in einem der beiden Äste des Spalts 17c angeordnet. Wiederum beträgt der Winkelbereich des Permanentmagneten 13c maximal dem Winkel des ihm zugeordneten Segments 16c, d.h. in Grundstellung wird der Permanentmagnet 13c vollständig vom Segment 16c überdeckt, wobei am Segment 16c das Rückflußelement 20c angeordnet ist. Diese Ausbildungsform eignet sich besonders für die Messung von kleineren Winkeln.

Die bisherigen Ausführungsbeispiele sind auf eine relativ dünne Trägerplatte und ein relativ dünnes Rückflußstück abgestimmt. Wie in Figur 18 dargestellt, kann statt des überstehenden Rückflußstückes auch die Trägerplatte dicker ausgebildet werden, so daß die Unterseite der Trägerplatte 12d etwa bündig mit der Stirnseite des Rückflußstücks 20d abschließt. Da im unteren Bereich, das heißt nahe der Unterseite der Trägerplatte 12d, nur noch ein geringer Magnetfluß übertritt, können sich somit axiale Toleranzschwankungen nur noch gering auf das Meßsignal auswirken. Dies gilt auch, wenn, wie in Figur 19 gezeigt, das Rückflußstück 20e dicker ausgebildet ist und seine Außenseite bündig mit der Stirnseite der Trägerplatte 12e abschließt.

Im Ausführungsbeispiel nach der Figur 20 ist der Einbau eines oben beschriebenen Sensors in eine Drosselklappenstelleinheit 30 dargestellt. Mit Hilfe dieser Einheit 30 wird der Drehwinkel einer Drosselklappe für eine Motorsteuerung erfaßt. Hierbei ist der Stator 15, 16 direkt im Deckel 31 der Drosselklappenstelleinheit 30 angeordnet. Da der Deckel 31 aus Kunststoff besteht, kann der Stator 15, 16 mit dem Rückflußelement 20 in den Deckel 31 mit eingespritzt werden. Es wäre aber auch möglich, die beiden Segmente 15, 16 des Stators in den Deckel 31 einzuklipsen oder kleben. In dem Spalt zwischen den Segmenten 15, 16 befindet sich, in der Figur 18 nicht gezeigt, das eine oder die zwei magnetfeldempfindliche(n) Elemente 25, das/die mit dem im Deckel 31 eingespritzten Stecker verbunden ist/sind. Die Achse 11 ist hierbei direkt auf der Welle 32 der Drosselklappe befestigt oder auch auf einem Fortsatz dieser Welle 32. Der Rotor 12 mit dem Permanentmagneten 13 ist somit direkt auf der Welle 32 der Drosselklappe befestigt. Ohne große Änderungen kann der Sensor nach den Ausführungsbeispielen 1 bis 19 in eine Drosselklappenstelleinheit 30 eingebaut werden. Hierbei kann in einfacher Weise das zum Beispiel bisher verwendete Potentiometer ausgetauscht werden. In der Figur 20 ist der Einbau eines Sensors nach Figur 1 dargestellt. Selbstverständlich kann auch ein Sensor nach Figur 9 oder 12 verwendet werden.

## Patentansprüche

1. Meßvorrichtung zur berührungslosen Erfassung eines Drehwinkels (α) zwischen einem Stator (15, 16) und einem Rotor (12), wobei auf dem Rotor (12) ein Permanentmagnet (13) angeordnet ist, dessen Polarisierungsrichtung in axialer Richtung des Rotors ausgerichtet ist, wobei sich zwischen in Ebenen übereinander angeordneten Stator (15, 16) und Rotor (12) ein Luftspalt (14) befindet und der Stator (15, 16) aus mindestens zwei Segmenten (15, 16, 20) besteht, die durch mindestens einen magnetisch nicht leitenden Spalt (17) getrennt sind, wobei sich in mindestens einem Spalt (17) mindestens ein magnetfeldempfindliches Element (25) befindet, wobei mindestens ein Teil (15) des Stators keine magnetisch leitende Verbindung mit dem Rotor (12) aufweist, wobei der Rotor (12) und die Segmente (15, 16) des Stators scheibenförmig ausgebildet sind, wobei der Rotor (12) aus magnetisch leitendem Material besteht, und wobei an einem der Segmente (16) mindestens ein Rückflußstück (20) angeordnet ist, das über den Rotor (12) hinausragt.

2. Meßvorrichtung zur berührungslosen Erfassung eines Drehwinkels (α) zwischen einem Stator (15, 16) und einem Rotor (12), wobei auf dem Rotor (12) ein Permanentmagnet (13) angeordnet ist, dessen Polarisierungsrichtung in axialer Richtung des Rotors ausgerichtet ist, wobei sich zwischen in Ebenen übereinander angeordneten Stator (15, 16) und Rotor (12) ein Luftspalt (14) befindet und der Stator (15, 16) aus mindestens zwei Segmenten (15, 16, 20) besteht, die durch mindestens einen magnetisch nicht leitenden Spalt (17) getrennt sind, wobei sich in mindestens einem Spalt (17) mindestens ein magnetfeldempfindliches Element (25) befindet, wobei mindestens ein Teil (15) des Stators keine magnetisch leitende Verbindung mit dem Rotor (12) aufweist, wobei der Rotor (12) und die Segmente (15, 16) des Stators scheibenförmig ausgebildet sind, wobei der Rotor (12) aus magnetisch leitendem Material besteht, wobei an einem der Segmente (16) mindestens ein Rückflußstück (20) angeordnet ist, und wobei der Rotor (12) über das Rückflußstück (20) hinausragt.

3. Meßvorrichtung zur berührungslosen Erfassung eines Drehwinkels (α) zwischen einem Stator (15, 16) und einem Rotor (12), wobei auf dem Rotor (12) ein Permanentmagnet (13) angeordnet ist, dessen Polarisierungsrichtung in axialer Richtung des Rotors ausgerichtet ist, wobei sich zwischen in Ebenen übereinander angeordneten Stator (15, 16) und Rotor (12) ein Luftspalt (14) befindet und der Stator (15, 16) aus mindestens zwei Segmenten (15,. 16, 20) besteht, die durch mindestens einen magnetisch nicht leitenden Spalt (17) getrennt sind, wobei sich in mindestens einem Spalt (17) mindestens ein magnetfeldempfindliches Element (25) befindet, wobei mindestens ein Teil (15) des Stators keine magnetisch leitende Verbindung mit dem Rotor (12) aufweist, wobei der Rotor (12) und die Segmente (15, 16) des Stators scheibenförmig ausgebildet sind, wobei der Rotor (12) aus magnetisch leitendem Material besteht, wobei an einem der Segmente (16) mindestens ein Rückflußstück (20) angeordnet ist, und wobei der Rotor (12) und das Rückflußstück (20) unterschiedliche Dicken aufweisen.

4. Meßvorrichtung nach einem der Ansprüche 1 bis 3, **dadurch gekennzeichnet, daß** die Segmente (15, 16) symmetrisch ausgebildet sind.

5. Meßvorrichtung nach einem der Ansprüche 1 bis 3, **dadurch gekennzeichnet, daß** die Segmente (15, 16) unsymmetrisch ausgebildet sind.

6. Meßvorrichtung nach einem der Ansprüche 1 bis 5, **dadurch gekennzeichnet, daß** der Rotor (12) spielfrei auf der Achse (11) eines zu überwachenden Bauteils angeordnet ist.

7. Drosselklappensensor mit einer Meßvorrichtung nach einem der Ansprüche 1 bis 6, **dadurch gekennzeichnet, daß** der als Stator (15, 16) dienende Teil im Deckel (31) des Sensors (30) integriert ist.

8. Drosselklappensensor nach Anspruch 7, **dadurch gekennzeichnet, daß** der Deckel (31) aus Kunststoff besteht und der Stator (15, 16) im Deckel (31) eingespritzt ist.

## Claims

1. Measurement apparatus for non-contacting detection of a rotation angle (α) between a stator (15, 16) and a rotor (12), with a permanent magnet (13) being arranged on the rotor (12), whose polarization direction is aligned in the axial direction of the rotor, with an air gap (14) being located between the stator (15, 16) and the rotor (12), which are arranged one above the other in layers, and the stator (15, 16) comprising at least two segments (15, 16, 20) which are separated by at least one magnetically impermeable gap (17), with at least one element (25) which is sensitive to magnetic fields being located in at least one gap (17), with at least a portion (15) of the stator having no magnetically permeable link to the rotor (12), with the rotor (12) and the segments (15, 16) of the stator being in the form of discs, with the rotor (12) being composed of magnetically permeable material, and with at least one return path piece (20), which projects beyond the rotor (12), being arranged on one of the segments (16).

2. Measurement apparatus for non-contacting detection of a rotation angle (α) between a stator (15, 16) and a rotor (12), with a permanent magnet (13) being arranged on the rotor (12), whose polarization direction is aligned in the axial direction of the rotor, with an air gap (14) being located between the stator (15, 16) and the rotor (12), which are arranged one above the other in layers, and the stator (15, 16) comprising at least two segments (15, 16, 20) which are separated by at least one magnetically impermeable gap (17), with at least one element (25) which is sensitive to magnetic fields being located in at least one gap (17), with at least a portion (15) of the stator having no magnetically permeable link to the rotor (12), with the rotor (12) and the segments (15, 16) of the stator being in the form of discs, with the rotor (12) being composed of magnetically permeable material, with at least one return path piece (20) being arranged on one of the segments (16), and with the rotor (12) projecting beyond the return path piece (20).

3. Measurement apparatus for non-contacting detection of a rotation angle (α) between a stator (15, 16) and a rotor (12), with a permanent magnet (13) being arranged on the rotor (12), whose polarization direction is aligned in the axial direction of the rotor, with an air gap (14) being located between the stator (15, 16) and the rotor (12), which are arranged one above the other in layers, and the stator (15, 16) comprising at least two segments (15, 16, 20) which are separated by at least one magnetically impermeable gap (17), with at least one element (25) which is sensitive to magnetic fields being located in at least one gap (17), with at least a portion (15) of the stator having no magnetically permeable link to the rotor (12), with the rotor (12) and the segments (15, 16) of the stator being in the form of discs, with the rotor (12) being composed of magnetically permeable material, with at least one return path piece (20) being arranged on one of the segments (16), and with the rotor (12) and the return path piece (20) having differing thicknesses.

4. Measurement apparatus according to one of Claims 1 to 3, **characterized in that** the segments (15, 16) are symmetrical.

5. Measurement apparatus according to one of Claims 1 to 3, **characterized in that** the segments (15, 16) are asymmetric.

6. Measurement apparatus according to one of Claims 1 to 5, **characterized in that** the rotor (12) is arranged without any play on the axis (11) of a component to be monitored.

7. Throttle valve sensor having a measurement apparatus according to one of Claims 1 to 6, **characterized in that** the part which acts as the stator (15, 16) is integrated in the cover (31) of the sensor (30).

8. Throttle valve sensor according to Claim 7, **characterized in that** the cover (31) is composed of plastic, and the stator (15, 16) is injection-moulded in the cover (31).

## Revendications

1. Dispositif de mesure pour la saisie sans contact d'un angle de rotation (α) entre un stator (15, 16) et un rotor (12)
le rotor (12) portant un aimant permanent (13) dont la direction de polarisation est alignée dans la direction axiale du rotor,
entre le stator (15, 16) et le rotor (12) superposés dans des plans, il subsiste un entrefer (14), le stator (15, 16) se composant d'au moins deux segments (15, 16, 20) séparés par au moins un intervalle (17) non magnétoconducteur,
et dans au moins cet intervalle (17) il y a au moins un élément magnétosensible (25),
au moins une partie du stator ne présente pas de liaison magnétoconductrice avec le rotor (12),
le rotor (12) et les segments (15, 16) du stator sont en forme de disques,
le rotor (12) étant réalisé en une matière à conductivité magnétique et
l'un des segments (16) comporte au moins une pièce de retour de flux (20) qui déborde du rotor (12).

2. Dispositif de mesure pour la saisie sans contact d'un angle de rotation (α) entre un stator (15, 16) et un rotor (12)
le rotor (12) portant un aimant permanent (13) dont la direction de polarisation est alignée dans la direction axiale du rotor,
entre le stator (15, 16) et le rotor (12) superposés dans des plans, il subsiste un entrefer (14), le stator (15, 16) se composant d'au moins deux segments (15, 16, 20) séparés par au moins un intervalle (17) non magnétoconducteur,
et dans au moins cet intervalle (17) il y a au moins un élément magnétosensible (25),
au moins une partie du stator ne présente pas de liaison magnétoconductrice avec le rotor (12),
le rotor (12) et les segments (15, 16) du stator sont en forme de disques,
le rotor (12) étant réalisé en une matière à conductivité magnétique et
dans au moins un segment (16) il y a au moins une pièce de retour de flux (20) et le rotor (12) déborde de la pièce de retour de flux (20).

3. Dispositif de mesure pour la saisie sans contact d'un angle de rotation (α) entre un stator (15, 16) et un rotor (12)
le rotor (12) portant un aimant permanent (13) dont la direction de polarisation est alignée dans la direction axiale du rotor,
entre le stator (15, 16) et le rotor (12) superposés dans des plans, il subsiste un entrefer (14), le stator (15, 16) se composant d'au moins deux segments (15, 16, 20) séparés par au moins un intervalle (17) non magnétoconducteur,
et dans au moins cet intervalle (17) il y a au moins un élément magnétosensible (25),
au moins une partie du stator ne présente pas de liaison magnétoconductrice avec le rotor (12),
le rotor (12) et les segments (15, 16) du stator sont en forme de disques, le rotor (12) étant réalisé en une matière à conductivité magnétique et le rotor (12) et la pièce de retour de flux (20) ont des épaisseurs différentes.

4. Dispositif de mesure selon l'une des revendications 1 à 3,
**caractérisé en ce que**
les segments (15, 16) sont symétriques.

5. Dispositif de mesure selon l'une des revendications 1 à 3,
**caractérisé en ce que**
les segments (15, 16) sont asymétriques.

6. Dispositif de mesure selon l'une des revendications 1 à 5,
**caractérisé en ce que**
le rotor (12) est installé sans jeu sur l'axe (11) d'une pièce à surveiller.

7. Capteur de volet d'étranglement équipé d'un dispositif de mesure selon l'une des revendications 1 à 6,
**caractérisé en ce que**
la partie du couvercle (31) qui sert de stator (15, 16) intègre le stator (30).

8. Capteur de volet d'étranglement selon la revendication 7,
**caractérisé en ce que**
le couvercle (31) est en matière plastique et le capteur (15, 16) est injecté dans le couvercle (31).
